# EUROPEAN PATENT APPLICATION

(11) **EP 4 693 715 A1**
(43) Date of publication of application: **11.02.2026**
(21) Application number: 24840015.2
(22) Date of filing: 05.07.2024
(51) Int. Cl.: H01M 50/59, H01M 50/588, H01M 50/516, H01M 50/211

(54) **SECONDARY BATTERY MODULE**

(30) Priority: 07.07.2023 KR 20230088560
(71) Applicant: LG Energy Solution, Ltd., Seoul 07335 (KR)
(72) Inventor: HONG, Min Seok, Daejeon 34122 (KR); KIM, Min Seop, Daejeon 34122 (KR)
(74) Representative: Plasseraud IP
(86) International application number: PCT/KR2024/009611
(87) International publication number: WO 2025/014203

(57) **Abstract**

The present disclosure provides a secondary battery module in which a cell assembly having a plurality of battery cells with electrode leads protruding from one side stacked is embedded in a main frame, including a fixed frame coupled to the main frame; a moving frame that is connected to the fixed frame through a support fixed to the fixed frame at one end thereof and is capable of tilting and pivoting movements at a point connected to the support; and a busbar coupled to the moving frame and to which the electrode leads are bonded, wherein the moving frame moves together with the electrode leads according to the force acting on the electrode leads.

## Description

### TECHNICAL FIELD

The present application claims priority to Korean Patent Application No. 10-2023-0088560 filed on July 7, 2023 in the Republic of Korea, the disclosure of which is incorporated herein by reference.

The present disclosure relates to a secondary battery module, and more specifically, to a secondary battery module capable of preventing disconnection by allowing movement of minimizing a tensile force when the tensile force is generated in the electrode lead due to swelling or an impact occurred in the battery cell.

### BACKGROUND ART

Demand for high-efficiency secondary batteries is rapidly increasing in the fields of portable devices and electric vehicles. Among such secondary batteries, lithium secondary batteries having high energy density, relatively high voltage, and low self-discharge rate are commercialized and widely used, and research and development to improve performance thereof are being actively conducted.

Secondary batteries have a structure in which an electrode assembly and an electrolyte are embedded in a case such as a can or a pouch.

Among these, a pouch-type secondary battery has a structure in which an electrode assembly is mounted in the pouch. In this case, the electrode assembly has a structure in which a positive electrode, a separator, and a negative electrode are repeatedly stacked, wherein positive electrode tabs extending from each positive electrode are collected together and bonded to positive electrode leads, and negative electrode tabs extending from each negative electrode are collected together and bonded to negative electrode leads. And, the ends of the positive electrode leads and the negative electrode leads protrude from the pouch so as to be electrically connected to the outside.

Meanwhile, a plurality of secondary batteries mounted on a vehicle, an energy storage system (ESS), or the like are combined to form a secondary battery module to increase output and electricity storage capacity, and a plurality of secondary battery modules are combined to form a secondary battery pack. That is, a plurality of secondary batteries are collected together to be manufactured as a secondary battery module, and a plurality of secondary battery modules are collected together to be manufactured as a secondary battery pack.

When the pouch-type secondary battery is manufactured as a secondary battery module, the secondary batteries (battery cells) are stacked so that their flat surfaces are in contact with each other, and are provided as a cell stack 2 in a state where the secondary batteries are bound together by tape, cable, or the like, or by applying an adhesive to the surfaces in contact.

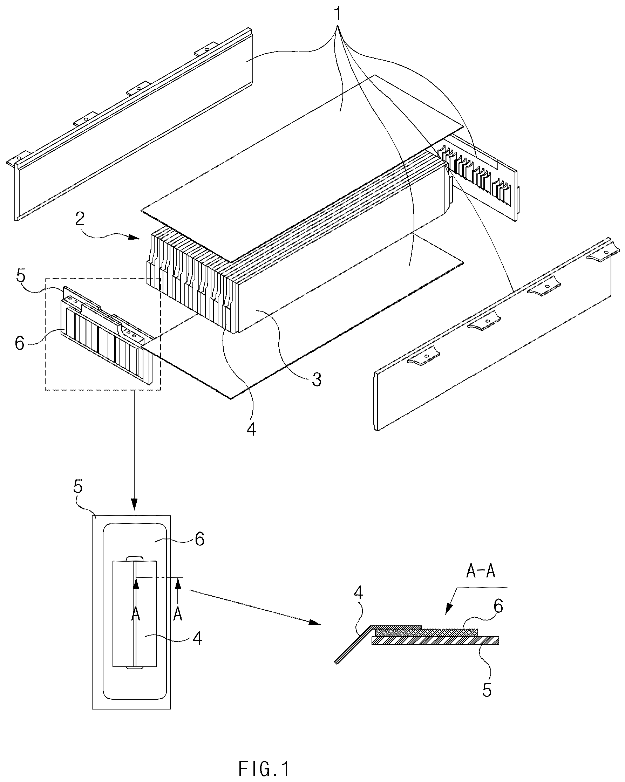

Referring to FIG. 1 that shows an exploded view of a conventional secondary battery module, an enlarged view of a portion of the busbar frame provided as a fixed frame, and a cross-sectional view of portion A-A, each of the battery cells 3 is stacked and provided as a cell assembly 2 having a rectangular prism shape.

Then, a main frame 1 is coupled to cover the six surfaces of the cell assembly 2 except for the two surfaces from which both electrode leads (positive electrode lead and negative electrode lead) 4 protrude. The main frame 1 is coupled in a state where a plurality of parts cover the surfaces of the cell assembly 2 so as to be smoothly coupled to the cell assembly 2.

And, when the main frame 1 is coupled, the busbar frame 5 is coupled to both opened side surfaces of the cell assembly 2 as a fixed frame. Busbars 6 electrically connected to each of the electrode leads 4 are coupled to the busbar frame 5. The busbar 6 is electrically connected to a terminal (not shown) electrically connected to an external device, and is fixedly installed on the busbar frame 5. Open slots are formed in the busbar frame 5 and the busbar 6, respectively, and the slots are disposed to be open to each other. Then, the electrode leads 4 are welded to the busbar 6 by passing through the slots.

Therefore, since one end of the electrode lead 4 is fixed to the cell assembly 2 and the other end is welded to the busbar 6, the movement of the electrode lead 4 is restricted.

However, when swelling occurs in or an impact is applied to some (or all) of the battery cells stacked in the cell assembly 4, a tensile force is generated in the electrode lead 4 of the corresponding battery cell 3. However, the electrode lead 4 is fixed to the busbar 6, and thus, when a tensile force exceeding a critical point is applied, disconnection of the electrode lead 4 and/or damage to the busbar 6 may occur, thereby causing a possibility that the entire secondary battery module may become inoperable.

### SUMMARY

### TECHNICAL PROBLEM

Therefore, the present disclosure is directed to providing a secondary battery module capable of preventing disconnection of the electrode lead by allowing movement to accommodate a tensile force even when the tensile force is generated in the electrode lead.

### TECHNICAL SOLUTION

In order to achieve the above-described purpose, the present disclosure provides a secondary battery module in which a cell assembly having a plurality of battery cells with electrode leads protruding from one side stacked is embedded in a main frame, including a fixed frame coupled to the main frame; a moving frame that is connected to the fixed frame through a support fixed to the fixed frame at one end thereof and is capable of tilting and pivoting movements at a point connected to the support; and a busbar coupled to the moving frame and to which the electrode leads are bonded, wherein the moving frame moves together with the electrode leads according to the force acting on the electrode leads.

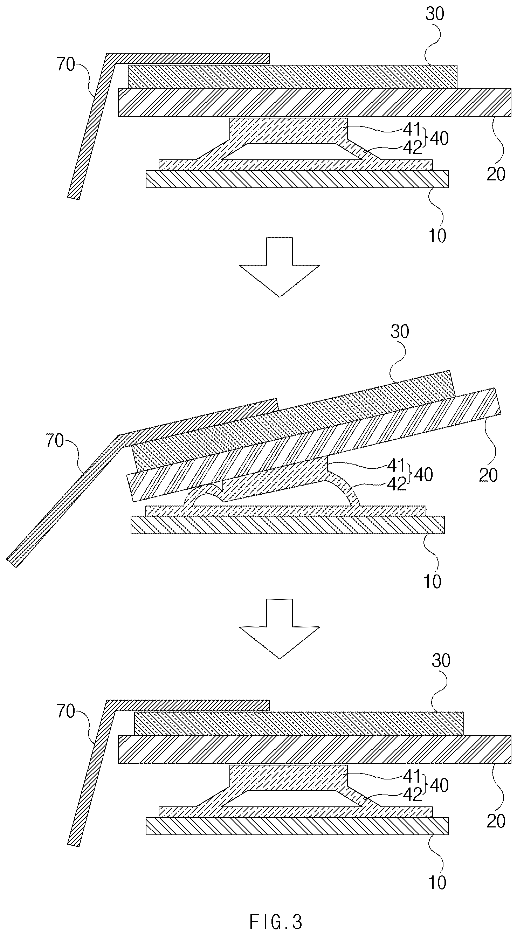

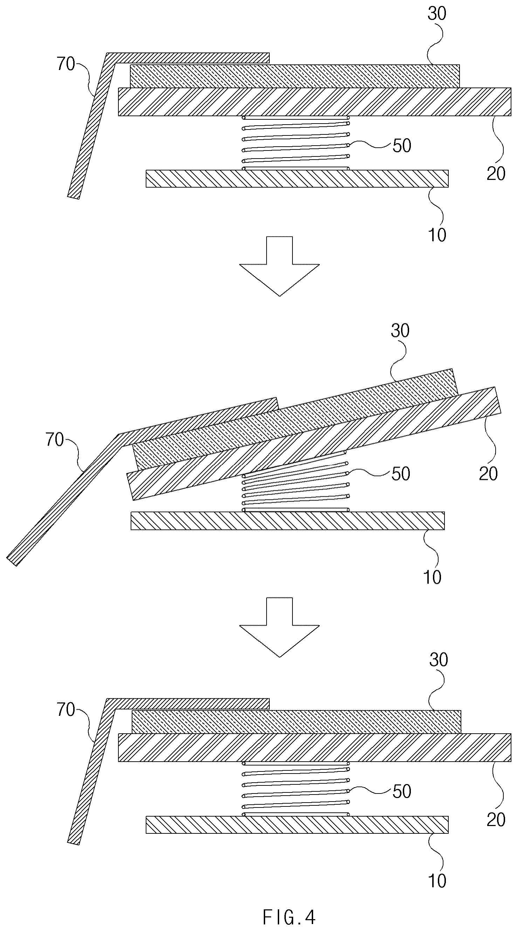

The tilting movement described herein refers to a movement that tilts within a predetermined angle range at the same time as the moving frame 20 is pressed, as shown in FIGS. 3 and 4. And, the pivoting movement refers to a movement in which the moving frame rotates around a point connected to the support. In this case, the rotation direction may be a plurality of directions.

The support allows the moving frame to move, and has an elastic force restoring the moving frame to its original position when the force acting on the electrode lead is removed.

The support provided by the present disclosure includes a body portion on one side fixed to a moving frame; and a leg portion in which one end is connected to the body portion and the other end is connected to the fixed frame, wherein the leg portion is elastically deformed and elastically restored according to the movement of the moving frame.

The leg portions are provided in two being spaced apart from each other, and the distance between the leg portions is formed such that the distance between the points connected to the fixed frame is longer than the distance between the points connected to the body portion.

In this case, the support is made of a silicone material having electrical insulation.

And, two or more supports are disposed at positions spaced apart from each other between the moving frame and the fixed frame.

The support provided in the present disclosure may be provided in other forms. That is, the support may be provided as a coil spring having one end connected to a fixed frame and the other end connected to a moving frame. In this case, the spring may be one of a compression spring and a tension spring.

The moving frame is divided into a first area and a second area based on a rotation axis, and the first area and the second area may be configured to be foldable on the rotation axis.

Two supports are provided at positions spaced apart from each other between the moving frame and the fixed frame, one of which is disposed in the first area and the other is disposed in the second area.

A torsion spring that maintains the level of the first area and the second area by an elastic force and resists a folding force is coupled to the rotation axis.

At this time, separate electrode leads are bonded to the first area and the second area of the busbar, respectively.

Also, the present disclosure further provides a secondary battery pack in which a plurality of secondary battery modules having the above configuration are electrically connected.

### ADVANTAGEOUS EFFECTS

In the present disclosure, a support is provided between the moving frame and the fixed frame, so that the moving frame is movable (relatively) in the fixed frame. Accordingly, movement is allowed to offset the tensile force of the electrode lead, thereby preventing disconnection of the electrode lead.

The support may allow tilting and pivoting movement of the moving frame, thereby allowing the electrode lead to move in various directions.

The support may be provided as an elastic body to prevent excessive movement of the electrode lead and may apply a force to restore the electrode lead to its original position. That is, when no external force is applied to the electrode lead, an elastic force may prevent unnecessary movement of the electrode lead and maintain its original state.

The support provided in the present disclosure may efficiently support the moving frame and be elastically deformed by having two leg portions.

And, two or more supports are disposed at positions spaced apart from each other between the moving frame and the fixed frame, so that the moving frame may be supported more stably.

The busbar and the moving frame are divided into a first area and a second area based on the rotation axis in a state of being coupled to each other, and the first area and the second area are configured to be foldable on the rotation axis, thereby more flexibly responding to the individual movement of the electrode leads on both sides.

### BRIEF DESCRIPTION OF THE DRAWINGS

FIG. 1 is a view that includes an exploded view of a conventional secondary battery module, an enlarged view of a portion of the busbar frame provided as a fixed frame, and a cross-sectional view of portion A-A.
FIG. 2 is a cross-sectional view showing a state where the support provided in Embodiment 1 of the present disclosure is installed.
FIG. 3 is a view showing the movements of the support shown in FIG. 2.
FIG. 4 is a cross-sectional view showing a state where the support provided in Embodiment 2 of the present disclosure is installed and the movements of the support.
FIG. 5a is a cross-sectional view showing a state where two supports provided in Embodiment 1 of the present disclosure are installed being spaced apart from each other.
FIG. 5b is a cross-sectional view showing a state where two supports provided in Embodiment 2 of the present disclosure are installed being spaced apart from each other.
FIG. 6 is a view showing a state where a busbar and a moving frame are divided into a first area X and a second area Y according to Embodiment 3 of the present disclosure.
FIG. 7 is a view showing a state where the busbar and the moving frame are folded in the view of FIG. 6.
FIG. 8 is a view showing a state where a torsion spring is coupled in the view of FIG. 6.

### DETAILED DESCRIPTION

Hereinafter, the present disclosure will be described in detail with reference to the accompanying drawings to enable those having ordinary skill in the technical field pertaining to the present disclosure to easily carry out the present disclosure. However, the present disclosure may be embodied in many different forms and is not limited by the embodiments described herein.

To clearly describe the present disclosure, parts irrelevant to the description are omitted, and the identical reference numerals are affixed to the identical or similar elements throughout the specification.

Additionally, the terms or words used in the present disclosure and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation.

The present disclosure relates to a secondary battery module capable of preventing disconnection by allowing the movement of electrode leads, and hereinafter, embodiments of the present disclosure will be described in more detail with reference to the accompanying drawings.

### Embodiment 1

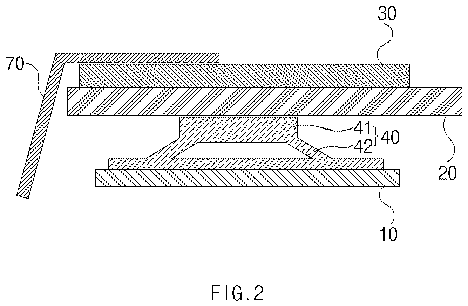

FIG. 2 is a cross-sectional view showing a state where the support provided in Embodiment 1 of the present disclosure is installed, and FIG. 3 is a view showing the movements of the support shown in FIG. 2.

Referring to the drawings, the secondary battery module provided in this embodiment has a structure in which a cell assembly having a plurality of battery cells with electrode leads 70 protruding from one side stacked is embedded in a main frame, and is configured to include a fixed frame 10, a moving frame 20, a busbar 30, and a support 40.

The fixed frame 10 is coupled to both sides of the main frame (i.e., the side where the electrode lead protrudes) as in a coupling method of the conventional busbar frame, and a slit may be formed to allow the electrode lead 70 to pass through.

And, the support 40 is seated on the fixed frame 10, and the moving frame 20 is coupled through the support 40. That is, the moving frame 20 is connected to the fixed frame 10 through the support 40, and is capable of tilting and pivoting movements at a point connected to the support 40.

The busbar 30 to which the electrode lead 70 protruding from the battery cell included in the cell assembly is bonded is coupled to the moving frame 20.

Accordingly, when a movement occurs in the corresponding battery cell due to swelling or other reasons, the moving frame 20 moves together with the electrode lead 70 according to the force (particularly, a tensile force) acting on the electrode lead 70.

For reference, the tilting movement described above refers to a movement that tilts within a predetermined angle range at the same time as the moving frame 20 is pressed, as shown in FIGS. 3 and 4. And, the pivoting movement refers to a movement in which the moving frame 20 rotates around a point connected to the support 40, and in this case, the rotation direction may be a plurality of directions.

The support 40 provided in this embodiment allows the moving frame 20 to move, and has an elastic force restoring the moving frame 20 to its original position when the force acting on the electrode lead 70 is removed. That is, the support 40 is made of an elastic material such as a rubber material or a silicone material, and in this embodiment, the support 40 is made of a silicone material having electrical insulation in consideration of the possible occurrence of a short circuit.

And, the support 40 is configured to include a body portion 41 on one side fixed to the moving frame 20, and a leg portion 42 in which one end is connected to the body portion 41 and the other end is connected to the fixed frame 10.

Accordingly, the body portion 41 and/or the leg portion 42 are elastically deformed and elastically restored according to the movement of the moving frame 20.

The leg portions 42 are provided in two being spaced apart from each other, and the distance between the leg portions 42 is formed such that the distance between the points connected to the fixed frame 10 (the distance between the lower ends of the leg portions in FIG. 2) is longer than the distance between the points connected to the body portion 41 (the distance between the upper ends of the leg portions in FIG. 2).

As shown in FIG. 3, when no force is applied to the electrode lead 70, the support 40 remains stable (see the upper picture of FIG. 3). However, when an external force is applied to the electrode lead 70, the support 40 is elastically deformed and allows the movement (tilting and/or pivoting) of the moving frame 20 (see the middle picture of FIG. 3).

Then, when the external force on the electrode lead 70 is released, the moving frame 20 is restored to its original position by the elastic restoring force of the support 40 (see the lower picture of FIG. 3).

### Embodiment 2

The present disclosure provides a secondary battery module having a support 50 that can be used in place of or together with the support provided in Embodiment 1 as Embodiment 2.

FIG. 4 is a cross-sectional view showing a state where the support provided in Embodiment 2 of the present disclosure is installed and the movements of the support.

That is, the secondary battery module provided in this embodiment is configured to include a fixed frame 10, a moving frame 20, and a busbar 30 in the same configuration as Embodiment 1, but the support 50 has a different structure.

That is, the support 50 may be provided in the form of a coil spring having one end connected to the fixed frame 10 and the other end connected to the moving frame 20.

The support 50 may be configured to resist only one of a tensile force and a compressive force, but is preferably configured to resist both forces.

That is, as shown in FIG. 4, when no force is applied to the electrode lead 70, the support 50 in the form of a coil spring supports the load of the moving frame 20 and remains stable (see the upper picture of FIG. 4).

However, when an external force is applied to the electrode lead 70, the support 50 is elastically deformed to compress or stretch and allows the movement (tilting and/or pivoting) of the moving frame 20 (see the middle picture of FIG. 4). Then, when the external force on the electrode lead 50 is released, the moving frame 20 is restored to its original position by the elastic restoring force of the support 50 (see the lower picture of FIG. 4).

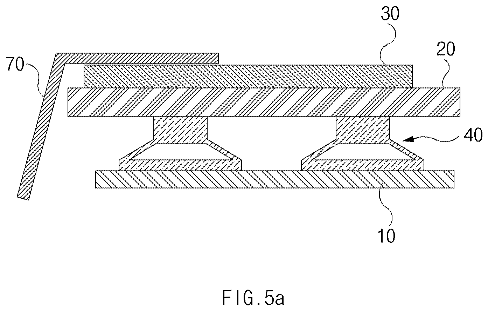

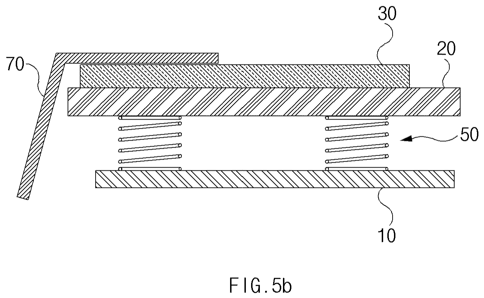

FIG. 5a is a cross-sectional view showing a state where two supports 40 provided in Embodiment 1 of the present disclosure are installed being spaced apart from each other, and FIG. 5b is a cross-sectional view showing a state where two supports 50 provided in Embodiment 2 of the present disclosure are installed being spaced apart from each other.

Also, not only the support 50 provided in Embodiment 2, but also the support 40 provided in Embodiment 1 may be disposed in two, respectively, as shown in FIGS. 5a and 5b. Additionally, they may be disposed in combination with each other. That is, a configuration in which the support 50 provided in Embodiment 2 is installed on one side between the moving frame 20 and the fixed frame 10 and the support 40 provided in Embodiment 1 is installed on the other side, is also possible.

### Embodiment 3

The present disclosure provides a secondary battery module having a configuration in which the busbar 30 and the moving frame 20 can be folded as Embodiment 3.

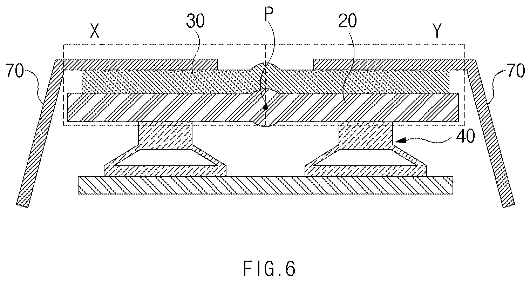

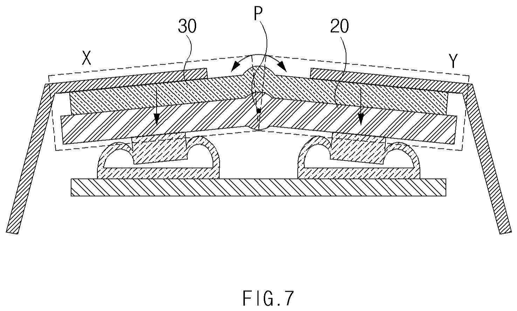

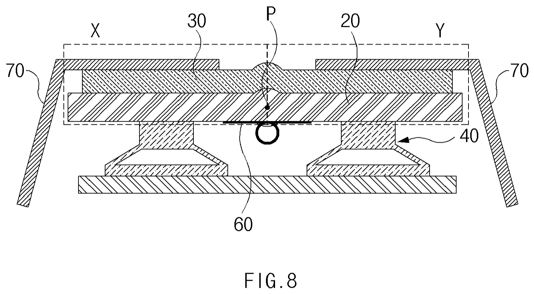

FIG. 6 is a view showing a state where the busbar 30 and the moving frame 20 are divided into a first area X and a second area Y according to Embodiment 3 of the present disclosure, FIG. 7 is a view showing a state where the busbar 30 and the moving frame 20 are folded in the view of FIG. 6, and FIG. 8 is a view showing a state where a torsion spring 60 is coupled in the view of FIG. 6.

Referring to the drawings, the secondary battery module provided in this embodiment is also configured to include a fixed frame 10, a moving frame 20, a busbar 30, and supports 40, 50. In this case, the support provided in this embodiment may be either the support 40 provided in Embodiment 1 or the support 50 provided in Embodiment 2, and as shown, two supports are provided, one on each side.

The fixed frame 10 is coupled to both sides of the main frame like a conventional busbar frame.

The support 40 is seated on the fixed frame, and the moving frame 20 is coupled through the support 20. The busbar 30 to which the electrode lead 70 protruding from the battery cell included in the cell assembly is bonded is coupled to the moving frame 20.

In this case, the busbar 30 and the moving frame 20 are divided into a first area and a second area based on the rotation axis P of the moving frame 20 in a state of being coupled to each other, and the first area X and the second area Y are connected to be foldable on the rotation axis P.

That is, the busbar 30 of the first area X and the busbar 30 of the second area Y are rotatably connected to each other, and the moving frame 20 of the first area X and the moving frame 20 of the second area Y are rotatably connected to each other. In this case, the rotation axis of the busbar 30 is disposed to lie directly above the rotation axis P of the moving frame 20. Alternatively, the busbar 30 is shown to be connected in the first area X and the second area Y, but the busbar 30 is divided into two and may be configured such that one is connected to the first area X and the other is connected to the second area Y.

That is, in a state where the busbar and the moving frame are coupled, the moving frame 20 is divided into a first area X and a second area Y based on the rotation axis P, and the first area X and the second area Y are foldable on the rotation axis P.

In this case, separate electrode leads 70 are bonded to the first area X and the second area Y of the busbar 30, respectively.

And, two supports 40 are provided at positions spaced apart from each other between the moving frame 20 and the fixed frame 10, one of which is disposed in the first area X and the other is disposed in the second area Y.

According to the configuration described above, when an external force is applied to the electrode lead 70, the busbar 30 and the moving frame 20 are folded in each of the first area X and the second area Y based on the rotation axis P.

At this time, the force applied from one electrode lead 70 may be divided and accommodated by the two supports 40, and on top of that, it may be absorbed by the movement of the opposite electrode lead 70.

Meanwhile, as shown in FIG. 8, a torsion spring 60 that maintains the level of the first area X and the second area Y by an elastic force and resists a folding force is coupled to the rotation axis P of the moving frame 20.

Additionally, the present disclosure may further provide a secondary battery pack in which a plurality of secondary battery modules having the above configuration are electrically connected.

The present disclosure having the above configuration may prevent disconnection of the electrode lead 70 by allowing movement of the electrode lead 70 within a certain range. That is, in the present disclosure, the supports 40, 50 are provided between the moving frame 20 and the fixed frame 10, so that the moving frame 20 is movable in the fixed frame 10. Accordingly, movement of the electrode lead 70 is allowed to prevent disconnection of the electrode lead 70.

The support may allow tilting and pivoting movements of the moving frame, thereby allowing the electrode lead 70 to move in various directions.

The support may be provided as an elastic body to prevent excessive movement of the electrode lead and may apply a force to restore the electrode lead to its original position. That is, when no external force is applied to the electrode lead 70, an elastic force may prevent unnecessary movement of the electrode lead.

The support provided in the present disclosure may efficiently support the moving frame and be elastically deformed by having two leg portions.

And, two or more supports are disposed at positions spaced apart from each other between the moving frame and the fixed frame, so that the moving frame may be supported more stably.

The busbar and the moving frame are divided into a first area and a second area based on the rotation axis in a state of being coupled to each other, and the first area and the second area are configured to be foldable on the rotation axis, thereby more flexibly responding to the individual movement of the electrode leads on both sides.

The present disclosure has been hereinabove described with regard to a limited number of embodiments and drawings, but the present disclosure is not limited thereto and may be embodied in different forms by those having ordinary skill in the technical field pertaining to the present disclosure within the technical aspect of the present disclosure and the scope of the appended claims and their equivalents.

### [List of Reference Numerals]

10: Fixed frame
20: Moving frame
30: Busbar
40, 50: Support
41: Body portion
42: Leg portion
60: Torsion spring
70: Electrode lead

## Claims

1. A secondary battery module in which a cell assembly having a plurality of battery cells with electrode leads protruding from one side stacked is embedded in a main frame, comprising:
a fixed frame coupled to the main frame;
a moving frame that is connected to the fixed frame through a support fixed to the fixed frame at one end thereof and is capable of tilting and pivoting movements at a point connected to the support; and
a busbar coupled to the moving frame and to which the electrode leads are bonded,
wherein the moving frame moves together with the electrode leads according to the force acting on the electrode leads.

2. The secondary battery module according to claim 1,
wherein the support allows the moving frame to move, and has an elastic force restoring the moving frame to its original position when the force acting on the electrode lead is removed.

3. The secondary battery module according to claim 2,
wherein the support comprises:
a body portion on one side fixed to a moving frame; and
a leg portion in which one end is connected to the body portion and the other end is connected to the fixed frame,
wherein the leg portion is elastically deformed and elastically restored according to the movement of the moving frame.

4. The secondary battery module according to claim 3,
wherein the leg portions are provided in two being spaced apart from each other, and the distance between the leg portions is formed such that the distance between the points connected to the fixed frame is longer than the distance between the points connected to the body portion.

5. The secondary battery module according to claim 3,
wherein the support is made of a silicone material having electrical insulation.

6. The secondary battery module according to claim 3,
wherein two or more supports are disposed at positions spaced apart from each other between the moving frame and the fixed frame.

7. The secondary battery module according to claim 2,
wherein the support is a coil spring having one end connected to a fixed frame and the other end connected to a moving frame.

8. The secondary battery module according to claim 2,
wherein the moving frame is divided into a first area and a second area based on a rotation axis, and the first area and the second area are foldable on the rotation axis.

9. The secondary battery module according to claim 8,
wherein two supports are provided at positions spaced apart from each other between the moving frame and the fixed frame, one of which is disposed in the first area and the other is disposed in the second area.

10. The secondary battery module according to claim 8,
wherein a torsion spring that maintains the level of the first area and the second area by an elastic force and resists a folding force is coupled to the rotation axis.

11. The secondary battery module according to claim 8,
wherein separate electrode leads are bonded to the first area and the second area of the busbar, respectively.

12. A secondary battery pack in which a plurality of secondary battery modules according to any one of claims 1 to 11 are electrically connected.
